# EUROPÄISCHE PATENTSCHRIFT

(11) **EP 3 022 100 B1**
(45) Veröffentlichungstag und Bekanntmachung des Hinweises auf die Patenterteilung: **06.09.2017**
(21) Anmeldenummer: 14739813.5
(22) Anmeldetag: 15.07.2014
(51) Int. Cl.: B60T 13/66, B60T 13/16

(54) **VERFAHREN ZUR STEUERUNG EINES BREMSDRUCKVERSTÄRKERS MIT HYDRAULISCHER BREMSDRUCKVERSTÄRKUNG**
METHOD FOR CONTROLLING A BRAKE PRESSURE BOOSTER USING HYDRAULIC BRAKE PRESSURE BOOSTING
PROCÉDÉ DE COMMANDE D'UN AMPLIFICATEUR DE PRESSION DE FREINAGE À AMPLIFICATION HYDRAULIQUE DE LA PRESSION DE FREINAGE

(30) Priorität: 16.07.2013 DE 102013213943
(43) Veröffentlichungstag der Anmeldung: 25.05.2016
(73) Patentinhaber: Ford Global Technologies, LLC, Dearborn, MI 48126 (US); Robert Bosch GmbH, 70469 Stuttgart (DE)
(72) Erfinder: SVENSSON, Thomas, 42799 Leichlingen (DE); EICHHORN, Thomas, 71701 Schwieberdingen (DE)
(74) Vertreter: Illing, Rolf
(86) Internationale Anmeldenummer: PCT/EP2014/065139
(87) Internationale Veröffentlichungsnummer: WO 2015/007728

(56) Entgegenhaltungen:
- DE-A1-102011 003 144
- US-A1- 2013 175 851
- US-B2- 8 038 228

## Beschreibung

Bremsdruckverstärkung sowie Bremsdruckverstärkeranordnung Die vorliegende Erfindung betrifft Verfahren zur Steuerung eines Bremsdruckverstärkers mit hydraulischer Bremsdruckverstärkung gemäß dem Oberbegriff des Anspruchs 1. Hydraulisch unterstützte Bremsdruckverstärker werden zunehmend anstelle von herkömmlichen vakuumbasierten Bremsdruckverstärkern eingesetzt. Ein Grund hierfür liegt in zusätzlichem Aufwand bei der Vakuumversorgung bei modernen Kraftfahrzeugen, da der Ansaugkrümmer als Vakuumquelle bei Dieselfahrzeugen per se nicht verfügbar ist, und auch bei Fahrzeugen mit Fremdzündung aufgrund zeitweiser Motorabschaltung oder Betrieb mit weit geöffneter Drosselklappe ein ausreichendes Ansaugkrümmervakuum ebenfalls nicht mehr ständig zur Verfügung steht.

Demgegenüber kann bei hydraulisch unterstützten Bremsdruckverstärkern in vorteilhafter Weise als Druckfluidquelle eine Versorgungspumpe für eine elektronische Stabilitätsregelung (ESC) mitgenutzt werden (in der Regel ist noch ein Druckspeicher als Ergänzung erforderlich). Da die elektronische Stabilitätsregelung (ESC) in der Europäischen Union für Neuwagen verpflichtend ist, ergeben sich durch eine derartige Doppelnutzung der ESC-Pumpeneinheit Synergieeffekte.

Entsprechende Bremsdruckverstärker sind beispielsweise aus der US 4 678 243 A oder der DE 10 2011 007 095 A1 bekannt, die hinsichtlich der näheren Ausgestaltung der Bremsdruckverstärker und der zugehörigen Steueranordnung zum Gegenstand dieser Offenbarung gemacht werden sollen.

Aus der US 8 038 228 B2 ist es bekannt, als Auslösekriterium für eine Zusatzdruckquelle den Bremsdruckgradienten heranzuziehen.

Aus der US 2011 0270500 A1 ist es ferner bekannt, die Zusatzdruckquelle abhängig vom Druck im Tandem-Hauptbremszylinder zu aktivieren.

Ein gängiger Vergleichstest für Bremsanlagen von Kraftfahrzeugen - der allerdings nicht zu den gesetzlich vorgegebenen Tests gehört - ist der sog. AMS-Bremstest, der auf die deutsche Automobilzeitschrift "Auto Motor und Sport" zurückgeht. Dieser Test besteht im Wesentlichen darin, dass ein mit maximal zulässiger Zuladung beladenes Fahrzeug zehnmal unmittelbar hintereinander von 0 auf 100 km/h maximal beschleunigt und dann wieder mittels einer Vollbremsung unter Ansprechen des Antiblockiersystems abgebremst wird. Dieser - recht extreme - Test stellt naturgemäß besondere Anforderungen an das Temperaturverhalten der Bremsanlage, insbesondere hinsichtlich des Bremsfadings.

Untersuchungen durch die Erfinder der vorliegenden Erfindung haben allerdings ergeben, dass ein AMS-Bremstest von der hydraulischen Bremsdruckunterstützung bei gegenwärtigen Bremsdruckverstärkern kaum oder gar nicht profitiert. Eine nähere Analyse hat ergeben, dass dies offenbar daran liegt, dass die zusätzliche hydraulische Druckquelle zwar durchaus aktiviert wird, dass die Einsatzpunkte und Aktivierungskriterien für die Aktivierung der zusätzlichen Bremskraftunterstützung bei bekannten Bremssteuerungen jedoch so ungünstig liegen, dass zum Zeitpunkt der Aktivierung bereits ein so hoher Bremsdruck herrscht, dass die gängigen ESC-Pumpen bzw. die im Hydraulikpfad befindlichen Rückschlagventile kein Bremsfluid mehr fördern bzw. in den Bremsdruckverstärker einspeisen können.

Der Erfindung liegt daher die Aufgabe zugrunde, die Steuerung eines gattungsgemäßen Bremsdruckverstärkers dahingehend zu verbessern, dass auch bei extremen Bedingungen - wie dem AMS-Bremstest - sowie bislang nicht unterstützten Fahrzeugbetriebsbereichen von der hydraulisch unterstützten Bremsdruckverstärkung profitiert werden kann.

Die Lösung der vorgenannten Aufgabe erfolgt mit den Merkmalen des Verfahrens gemäß dem Anspruch 1. Vorteilhafte Ausgestaltungen der Erfindung sind in den abhängigen Ansprüchen beschrieben.

Bei einem erfindungsgemäßen Verfahren zur Steuerung eines Bremsdruckverstärkers mit hydraulischer Bremsdruckverstärkung bei einem Kraftfahrzeug, wobei der Bremsdruckverstärker einen über eine Kolbenstange direkt oder indirekt mit einem Bremspedal verbundenen Tandem-Hauptbremszylinder zur Bremsfluidbeaufschlagung der Betriebsbremsen des Kraftfahrzeugs, sowie eine selektiv über eine Steuereinrichtung abhängig von verschiedenen Motorbetriebsparametern aktivierbare oder deaktivierbare hydraulische Zusatzdruckquelle aufweist, deren Druckfluid im Aktivierungsfall die durch das Bremspedal aufgebrachte Bremskraft unterstützt, und wobei wenigstens der Druck im Tandem-Hauptbremszylinder sowie der Kolbenstangenhub des Tandem-Hauptbremszylinders von der Steuereinrichtung erfasst werden, ist vorgesehen, dass eine Aktivierung der Zusatzdruckquelle bei kumulativem Vorliegen wenigstens folgender Kriterien erfolgt:
a) Überschreiten eines vorgegebenen Tandem-Hauptbremszylinder-Druckschwellwertes, der zwischen 50% und 100%, bevorzugt zwischen 70% bis 80% eines Grenzdruckwertes liegt, ab dem die Betätigungsweg/Bremsdruckkurve ohne zusätzliche Bremsdruckunterstützung einen Kniepunkt aufweist, und
b) Überschreiten eines vorgegebenen Kolbenstangen-Aktivierungshubgrenzwertes, der bei 20% bis 100% der verfügbaren Hublänge, vorzugsweise bei 40% bis 60% der verfügbaren Hublänge liegt.

Die genannten Kolbenstangenhubwerte verstehen sich so, dass ein größerer Hubwert einer zunehmenden Bremsaktivierung entspricht.

Der in Kriterium a) erwähnte Kniepunkt-Druckwert, auf den die entsprechenden Prozentangaben bezogen sind, stellt einen charakteristischen Wert im Betätigungsweg/Druckdiagramm dar, ab dem die Kurve aufgrund des Eingriffs der Bremskraftregelung einen Knick aufweist und ab dem der Bremsdruck mit dem Betätigungsweg in der Regel schwächer ansteigt. Somit liegt der entsprechende Tandem-Hauptbremszylinder-Druckschwellwert verhältnismäßig niedrig, wo im Stand der Technik eine zusätzliche Bremskraftunterstützung noch nicht unbedingt für erforderlich gehalten wird.

Durch einen verhältnismäßig niedrig und deutlich unterhalb des Kniepunkts gewählten Tandem-Hauptbremszylinder-Druckschwellwert in Kriterium a) wird - in Zusammenhang mit dem weiteren Kriterium - gewährleistet, dass sich der Druck nötigenfalls rechtzeitig aufbauen kann, so dass sich ein Pumpenventil auch bei intensiven Bremsbetätigungen rechtzeitig öffnet, bevor ein zu hoher Gegendruck die Öffnung des Ventils verhindert. Die Wirkung der Pumpe kann aufgrund dieser Dimensionierung auch bei einem schnellen Durchdrücken des Bremspedals schon einsetzen, bevor der Kniepunkt erreicht ist, so dass der Fahrer den Kniepunkt nicht in Form eines "harten Bremspedals" bzw. eines Nachlassens der Bremswirkung über den verbleibenden Bremspedalweg bemerkt.

Das weitere kolbenhubabhängige Kriterium bewirkt, dass trotz eines verhältnismäßig niedrigen Tandem-Hauptbremszylinder-Druckschwellwertes eine Aktivierung nicht zu einem unerwünschten Zeitpunkt erfolgt.

Außerdem können bevorzugt ein oder mehrere, bevorzugt alle, der folgenden zusätzlichen weiteren fahrdynamischen Kriterien zur Aktivierung der Zusatzdruckquelle herangezogen werden:
c) Überschreiten einer vorgegebenen Mindest-Fahrzeuglateralgeschwindigkeit, die vorzugsweise bei etwa 5 bis 15 km/h liegt,
d) Vorliegen einer geringeren Lateralverzögerung als ein vorgegebener Grenzverzögerungswert, der vorzugsweise zwischen -0,4 bis -0,2g liegt (1g = Erdbeschleunigung 9,81 m/s²), und
e) Vorliegen einer höheren Longitudinalverzögerung als ein vorgegebener Grenzverzögerungswert, der vorzugsweise bei -0,5g liegt (1g = Erdbeschleunigung 9,81 m/s²).

So wird durch das Geschwindigkeitskriterium (Kriterium b) insbesondere verhindert, dass die zusätzliche Bremskraftunterstützung für längere Zeit z. B. bei Bergabfahrten aktiviert wird. Durch das Lateralverzögerungskriterium d) sowie das Longitudinalverzögerungskriterium e) wird die Bremskraftunterstützung auf fahrdynamisch stabile Fahrzustände limitiert.

Durch die genannten Kriterien, insbesondere durch die Kriterien a) und b), kann auch bei Bremsungen, wie sie dem AMS-Testzyklus zugrunde liegen, eine betrieblich wirksame Aktivierung der Zusatzdruckquelle gewährleistet werden. Insbesondere kann die ESC-Pumpe unter Zugrundelegung dieser Aktivierungskriterien den Bremsvorgang in der Praxis bei nahezu jedem Bremsszenario wirksam unterstützen, d.h. sowohl bei langsamen als auch bei schnellen Bremsbetätigungen als auch in Fällen, bei denen die Bremskraft im Verlauf des Bremsvorgangs gesteigert wird.

Dies wird in einer bevorzugten Ausgestaltung insbesondere dann gewährleistet, wenn der Tandem-Hauptbremszylinder-Druckschwellwert in Schritt a) unterhalb von 100 bar gewählt wird.

Insgesamt wird durch den vorliegenden Kriteriensatz auch ein zufriedenstellender Bremskomfort gewährleistet.

Als alternatives Kriterium zum Kolbenstangen-Aktivierungshubgrenzwert gemäß Kriterium b) kann in einer alternativen Ausgestaltung auch das Kriterium
b') Überschreiten eines vorgegebenen Grenzwerts der zeitlichen Änderung des Tandem-Hauptbremszylinder-Druckwertes zur Aktivierung der Zusatzdruckquelle
herangezogen werden.

Bevorzugt erfolgt eine Deaktivierung der Zusatzdruckquelle bei Unterschreiten eines vorgegebenen Kolbenstangen-Deaktivierungshubwerts, wobei der Kolbenstangen-Deaktivierungshubwert dem Kolbenstangen-Aktivierungshubgrenzwert abzüglich eines vorgegebenen Hysteresewertes entspricht. Dieser Hysteresezuschlag, der ein unkontrolliertes Oszillieren der Steuerung verhindern soll, kann beispielsweise 5% des Hubwertes betragen.

Bevorzugt erfolgt die Deaktivierung der Zusatzdruckquelle somit im Wesentlichen unabhängig von dem Tandem-Hauptbremszylinder-Druck, d.h., obwohl für die Aktivierung sowohl Druck als auch Hub im Tandem-Hauptbremszylinder herangezogen werden, ist die Deaktivierung vom Druck unabhängig.

Vielmehr erfolgt diese (vorbehaltlich der weiter unten diskutierten Betriebsbegrenzungen) im Wesentlichen ausschließlich abhängig von dem Unterschreiten eines Tandem-Hauptbremszylinder-Hubwertes. Dies bringt den Vorteil mit sich, dass dadurch auch bei Bremssituationen, bei denen der Bremsdruck im Hauptbremszylinder bedingt durch sog. Bremsfading oder sehr schnellen Bremsfluidfluss auf null oder nahezu null absinkt, eine in diesen Fällen nutzbringende Bremskraftverstärkung erhalten bleibt.

Bei einer vom Bremsdruck abhängigen Deaktivierung würde die Zusatzdruckquelle in derartigen Situationen dagegen abgeschaltet werden. Da aber für die Deaktivierung bevorzugt im Wesentlichen nur der Hub ausgewertet wird, wird verhindert, dass die Zusatzdruckquelle durch die genannten Effekte in einer eigentlich unangemessenen Situation abgeschaltet wird.

Dass im Gegensatz zu der Deaktivierung für die Aktivierung der Druck als Kriterium herangezogen wird, beeinträchtigt die zusätzliche Bremsunterstützung in den genannten Situationen (Bremsfading etc.) nicht, da vor Auftreten einer Situation wie eines Bremsfadings od. dgl., bei der der Druck im Hauptbremszylinder absinkt, der Bremsdruck vorher den vorgegebenen Schwellwert auf jeden Fall einmal überschritten hat, und somit bei ausreichendem Kolben- bzw. Pedalhub die Aktivierungsschwelle auf jeden Fall einmal gegeben war.

Grundsätzlich ist es dennoch denkbar, auch noch den Bremsdruck für die Deaktivierung zu überwachen. In diesem Falle wird man jedoch einen Druckschwellwert für die Deaktivierung vorsehen, der erheblich geringer als der Aktivierungs-Grenzwert in Schritt a) liegt. Beispielsweise könnte ein derartiger Deaktivierungs-Druckschwellwert nicht höher als 30% des eingangs erwähnten Grenzdruckwertes liegen, d.h. wenigstens 20% niedriger als die genannte untere Grenze von 50% für die Aktivierung.

Als zusätzliche Betriebsbegrenzung kann vorgesehen sein, dass die Zusatzdruckquelle nicht aktiviert bzw. umgehend deaktiviert wird, wenn der Tandem-Hauptbremszylinder-Druckwert einen Maximaldruckwert überschreitet, der vorzugsweise zwischen 180 und 220 bar liegt. Gegen derartige Drücke können die gängigen ESC-Pumpen, die im Rahmen dieser Erfindung eingesetzt werden, auf keinen Fall mehr Druckfluid fördern.

Ferner kann vorgesehen sein, dass die Zusatzdruckquelle nicht aktiviert bzw. umgehend deaktiviert wird, wenn die Lateralverzögerung einen vorgegebenen Grenzverzögerungswert von vorzugsweise zwischen -1,2 bis -1,4 g (g entspricht der Erdbeschleunigung) überschreitet. Bei derartigen Querverzögerungswerten wird die Kapazität der ESC-Pumpe eher für ESC-Eingriffe benötigt.

## Patentansprüche

1. Verfahren zur Steuerung eines Bremsdruckverstärkers mit hydraulischer Bremsdruckverstärkung bei einem Kraftfahrzeug, wobei der Bremsdruckverstärker einen über eine Kolbenstange direkt oder indirekt mit einem Bremspedal verbundenen Tandem-Hauptbremszylinder zur Bremsfluidbeaufschlagung der Betriebsbremsen des Kraftfahrzeugs, sowie eine selektiv über eine Steuereinrichtung abhängig von verschiedenen Motorbetriebsparametern aktivierbare oder deaktivierbare hydraulische Zusatzdruckquelle aufweist, deren Druckfluid im Aktivierungsfall den durch das Bremspedal aufgebrachte Bremsdruck unterstützt, und wobei wenigstens der Druck im Tandem-Hauptbremszylinder sowie der Kolbenstangenhub des Tandem-Hauptbremszylinders von der Steuereinrichtung erfasst werden,
**dadurch gekennzeichnet, dass**
eine Aktivierung der Zusatzdruckquelle bei kumulativem Vorliegen wenigstens folgender Kriterien erfolgt:
a) Überschreiten eines vorgegebenen Tandem-Hauptbremszylinder-Druckschwellwertes, der zwischen 50% und 100%, bevorzugt zwischen 70% bis 80% eines Grenzdruckwertes liegt, ab dem die Betätigungsweg/Bremsdruckkurve ohne zusätzliche Bremsdruckunterstützung einen Kniepunkt aufweist, und
b) Überschreiten eines vorgegebenen Kolbenstangen-Aktivierungshubgrenzwertes, der bei 20% bis 100% der verfügbaren Hublänge, vorzugsweise bei 40% bis 60% der verfügbaren Hublänge liegt.

2. Verfahren nach Anspruch 1,
**dadurch gekennzeichnet, dass**
zur Aktivierung der Zusatzdruckquelle ein oder mehrere der folgenden zusätzlichen Fahrdynamikkriterien vorliegen müssen
c) Überschreiten einer vorgegebenen Mindest-Fahrzeuglateralgeschwindigkeit, die vorzugsweise bei etwa 5 bis 15 km/h liegt,
d) Vorliegen einer geringeren Lateralverzögerung als ein vorgegebener Grenzverzögerungswert, der vorzugsweise zwischen -0,4g bis -0,2g liegt (g = 9,81 m/s²), und
e) Vorliegen einer höheren Longitudinalverzögerung als ein vorgegebener Grenzverzögerungswert, der vorzugsweise bei -0,5g liegt (g = 9,81 m/s²).

3. Verfahren nach Anspruch 1 oder 2,
**dadurch gekennzeichnet, dass**
als alternatives Kriterium anstelle des Kolbenstangen-Aktivierungshubgrenzwertes in Schritt b) das Kriterium
b') Überschreiten eines vorgegebenen Grenzwerts der zeitlichen Änderung des Tandem-Hauptbremszylinder-Druckwertes
herangezogen wird.

4. Verfahren nach einem der Ansprüche 1 bis 3,
**dadurch gekennzeichnet, dass**
der Tandem-Hauptbremszylinder-Druckschwellwert unterhalb von 100 bar gewählt wird.

5. Verfahren nach einem der Ansprüche 1 bis 4,
**dadurch gekennzeichnet, dass**
eine Deaktivierung der Zusatzdruckquelle bei Unterschreiten eines vorgegebenen Kolbenstangen-Deaktivierungshubgrenzwerts erfolgt, wobei der Kolbenstangen-Deaktivierungshubgrenzwert dem Kolbenstangen-Aktivierungshubgrenzwert abzüglich eines vorgegebenen Hysteresewertes entspricht.

6. Verfahren nach Anspruch 5,
**dadurch gekennzeichnet, dass**
die Deaktivierung der Zusatzdruckquelle im Wesentlichen unabhängig von dem Tandem-Hauptbremszylinder-Druck gesteuert wird, oder, falls ein Druckschwellwert vorgesehen ist, bei dessen Unterschreitung eine Deaktivierung erfolgen soll, dass dieser Deaktivierungs-Druckschwellwert nicht mehr als 30% des Grenzdruckwertes beträgt.

7. Verfahren nach einem der Ansprüche 1 bis 6,
**dadurch gekennzeichnet, dass**
die Zusatzdruckquelle nicht aktiviert bzw. umgehend deaktiviert wird, wenn der Tandem-Hauptbremszylinder-Druckwert einen Maximaldruckwert überschreitet, der vorzugsweise zwischen 180 und 220 bar liegt.

8. Verfahren nach einem der Ansprüche 1 bis 7,
**dadurch gekennzeichnet, dass**
die Zusatzdruckquelle nicht aktiviert bzw. umgehend deaktiviert wird, wenn die Lateralverzögerung einen vorgegebenen Grenzverzögerungswert von vorzugsweise zwischen -1,2 g bis -1,4 g überschreitet (g = 9,81 m/s²).

9. Verfahren nach einem der Ansprüche 1 bis 8,
**dadurch gekennzeichnet, dass**
dieses eine Bremsunterstützung durch Aktivierung der Zusatzdruckquelle insbesondere im Verlauf eines AMS-Bremstestzyklusses gewährleistet.

10. Verfahren nach einem der Ansprüche 1 bis 9,
**dadurch gekennzeichnet, dass**
eine Aktivierung der Zusatzdruckquelle bei Überschreiten eines vorgegebenen Tandem-Hauptbremszylinder-Druckschwellwertes und gleichzeitigem Überschreiten eines vorgegebenen Kolbenstangen-Aktivierungshubgrenzwertes ggf. unter Erfüllung weiterer Kriterien erfolgt, und
dass eine Deaktivierung der Zusatzdruckquelle bei Unterschreiten eines vorgegebenen Kolbenstangen-Deaktivierungshubgrenzwertes im Wesentlichen unabhängig von dem Tandem-Hauptbremszylinder-Druck erfolgt.

## Claims

1. Method for controlling a brake pressure booster with hydraulic brake pressure boosting in a motor vehicle, wherein the brake pressure booster comprises a tandem brake master cylinder connected directly or indirectly via a piston rod to a brake pedal for applying brake fluid to the service brakes of the motor vehicle and an additional hydraulic pressure source that can be selectively activated or deactivated by means of a control device depending on various engine operating parameters and whose pressure fluid in the case of activation assists the brake pressure applied by the brake pedal, and wherein at least the pressure in the tandem brake master cylinder and the piston rod travel of the tandem brake master cylinder are recorded by the control device,
**characterized in that**
activation of the additional pressure source takes place with the cumulative presence of at least the following criteria:
a) exceeding a specified tandem brake master cylinder pressure threshold value of between 50% and 100%, preferably between 70% and 80% of a pressure limit value, from which the operating travel/brake pressure curve comprises a knee point without additional brake pressure assistance, and
b) exceeding a specified piston rod activation travel limit value of 20% to 100% of the available travel, preferably of 40% to 60% of the available travel.

2. Method according to Claim 1,
**characterized in that**
for activation of the additional pressure source, one or more of the following additional driving dynamics criteria must be present
c) exceeding a specified minimum lateral vehicle speed, which is preferably approximately 5 to 15 km/h,
d) the presence of a lower lateral deceleration than a specified deceleration limit value, which is preferably between -0.4 g and -0.2 g (g = 9.81 m/s²), and
e) the presence of a higher longitudinal deceleration than a specified deceleration limit value, which is preferably -0.5 g (g = 9.81 m/s²).

3. Method according to Claim 1 or 2,
**characterized in that**
as an alternative criterion instead of the piston rod activation travel limit value in step b), criterion
b') exceeding a specified limit value of the variation with time of the tandem brake master cylinder pressure value is used.

4. Method according to any one of Claims 1 to 3,
**characterized in that**
the tandem brake master cylinder pressure threshold value is selected below 100 bar.

5. Method according to any one of Claims 1 to 4,
**characterized in that**
deactivation of the additional pressure source takes place on falling below a specified piston rod deactivation travel limit value, wherein the piston rod deactivation travel limit value corresponds to the piston rod activation travel limit value minus a specified hysteresis value.

6. Method according to Claim 5,
**characterized in that**
deactivation of the additional pressure source is controlled essentially independently of the tandem brake master cylinder pressure, or, if a pressure threshold value is provided, on falling below which deactivation should occur, that said deactivation pressure threshold value is not more than 30% of the pressure limit value.

7. Method according to any one of Claims 1 to 6,
**characterized in that**
the additional pressure source is not activated or is immediately deactivated if the tandem brake master cylinder pressure value exceeds a maximum pressure value that preferably lies between 180 and 220 bar.

8. Method according to any one of Claims 1 to 7,
**characterized in that**
the additional pressure source is not activated or is immediately deactivated if the lateral deceleration exceeds a specified deceleration limit value of preferably between -1.2 g to -1.4 g (g = 9.81 m/s²).

9. Method according to any one of Claims 1 to 8,
**characterized in that**
said method guarantees braking assistance by activation of the additional pressure source, especially during the course of an AMS brake test cycle.

10. Method according to any one of Claims 1 to 9,
**characterized in that**
activation of the additional pressure source takes place on exceeding a specified tandem brake master cylinder pressure threshold value and at the same time exceeding a specified piston rod activation travel limit value, possibly while meeting other criteria, and
that deactivation of the additional pressure source takes place on falling below a specified piston rod deactivation travel limit value essentially independently of the tandem brake master cylinder pressure.

## Revendications

1. Procédé de commande d'un amplificateur de pression de freinage à amplification hydraulique de la pression de freinage dans un véhicule automobile, dans lequel l'amplificateur de pression de freinage présente un maître-cylindre tandem relié à une pédale de frein directement ou indirectement par une tige de piston pour l'application du fluide de frein aux freins de service du véhicule automobile, ainsi qu'une source de pression hydraulique additionnelle pouvant être activée ou désactivée de façon sélective par un dispositif de commande en fonction de différents paramètres de fonctionnement du moteur, dont le fluide sous pression soutient en cas d'activation la pression de freinage appliquée par la pédale de frein, et dans lequel on détecte au moyen du dispositif de commande au moins la pression dans le maître-cylindre tandem ainsi que la course de la tige de piston du maître-cylindre tandem, **caractérisé en ce que** l'on effectue une activation de la source de pression additionnelle par la présence cumulée d'au moins les critères suivants:
a) dépassement d'une valeur de seuil de pression prédéterminée du maître-cylindre tandem, qui se situe entre 50 % et 100 %, de préférence entre 70 % et 80 %, d'une valeur de pression limite, à partir de laquelle la course d'actionnement/courbe de pression de freinage sans le soutien de la pression de freinage additionnelle présente un coude, et
b) dépassement d'une valeur limite de course d'activation prédéterminée de la tige de piston, qui se situe de 20 % à 100 % de la longueur de course disponible, de préférence de 40 % à 60 % de la longueur de course disponible.

2. Procédé selon la revendication 1, **caractérisé en ce qu'**au moins un ou plusieurs des critères de la dynamique de marche prédéterminés suivants doit/doivent être présent(s) pour l'activation de la source de pression additionnelle:
c) dépassement d'une vitesse latérale minimale prédéterminée du véhicule, qui se situe de préférence entre environ 5 et 15 km/h,
d) présence d'une décélération latérale plus faible qu'une valeur de décélération limite prédéterminée, qui se situe de préférence entre -0,4g et -0,2g (g = 9,81 m/s²), et
e) présence d'une décélération longitudinale plus élevée qu'une valeur de décélération limite prédéterminée, qui se situe de préférence à -0,5g (g = 9,81 m/s²).

3. Procédé selon la revendication 1 ou 2, **caractérisé en ce que** l'on considère comme critère alternatif au lieu de la valeur limite de la course d'activation de la tige de piston à l'étape b) le critère
b') dépassement d'une valeur limite prédéterminée de la variation temporelle de la valeur de pression du maître-cylindre tandem.

4. Procédé selon l'une quelconque des revendications 1 à 3, **caractérisé en ce que** l'on choisit la valeur de seuil de la pression du maître-cylindre tandem en dessous de 100 bar.

5. Procédé selon l'une quelconque des revendications 1 à 4, **caractérisé en ce que** l'on procède à une désactivation de la source de pression additionnelle en cas de descente en dessous d'une valeur limite de la course de désactivation prédéterminée de la tige de piston, dans lequel la valeur limite de la course de désactivation de la tige de piston correspond à la valeur limite de la course d'activation de la tige de piston moins une valeur d'hystérésis prédéterminée.

6. Procédé selon la revendication 5, **caractérisé en ce que** l'on commande la désactivation de la source de pression additionnelle essentiellement indépendamment de la pression du maître-cylindre tandem ou, dans le cas où il est prévu une valeur de seuil de pression, pour laquelle il doit se produire une désactivation en cas de franchissement à la baisse, **en ce que** cette valeur de seuil de pression de désactivation ne vaut pas plus de 30 % de la valeur de pression limite.

7. Procédé selon l'une quelconque des revendications 1 à 6, **caractérisé en ce que** l'on n'active pas ou on désactive immédiatement la source de pression additionnelle, lorsque la valeur de pression du maître-cylindre tandem dépasse une valeur de pression maximale, qui se situe de préférence entre 180 et 220 bar.

8. Procédé selon l'une quelconque des revendications 1 à 7, **caractérisé en ce que** l'on n'active pas ou on désactive immédiatement la source de pression additionnelle, lorsque la décélération latérale dépasse une valeur de décélération limite prédéterminée comprise de préférence entre -1,2g et -1,4g (g = 9,81 m/s²).

9. Procédé selon l'une quelconque des revendications 1 à 8, **caractérisé en ce que** celui-ci garantit un soutien du freinage par activation de la source de pression additionnelle au cours d'un cycle de test de freinage AMS.

10. Procédé selon l'une quelconque des revendications 1 à 9, **caractérisé en ce que**
l'on procède à une activation de la source de pression additionnelle en cas de dépassement d'une valeur de seuil de pression prédéterminée du maître-cylindre tandem et de dépassement simultané d'une valeur limite de course d'activation prédéterminée de la tige de piston éventuellement avec le respect d'autres critères, et que
l'on procède à une désactivation de la source de pression additionnelle en cas de descente en dessous d'une valeur limite de course de désactivation prédéterminée de la tige de piston essentiellement indépendamment de la pression du maître-cylindre tandem.
